# EUROPEAN PATENT SPECIFICATION

(11) **EP 1 095 765 B1**
(45) Date of publication and mention of the grant of the patent: **13.12.2006**
(21) Application number: 00309209.5
(22) Date of filing: 19.10.2000
(51) Int. Cl.: B32B 27/32, B65D 65/40

(54) **Patch bag with patch containing polypropylene**
Beutel mit Polypropylen enthaltender Schutzauflage
Sachet en plastique avec pièce protectrice contenant du polypropylène

(30) Priority: 25.10.1999 US 426828
(43) Date of publication of application: 02.05.2001
(73) Proprietor: Cryovac, Inc., Duncan, South Carolina 29334-0464 (US)
(72) Inventor: Ramesh, Ram Kumar, Greenville, SC 29615 (US)
(74) Representative: Price, Nigel John King

(56) References cited:
- EP-A- 0 870 691
- EP-A- 0 913 338
- WO-A-97/24272
- GB-A- 2 329 373

## Description

### Field of the Invention

The present invention relates to the packaging of products in bags made from a puncture-resistant flexible film. More particularly, the present invention relates to a patch bag, as well as processes of making patch bags.

### Background of the Invention

Various patch bags have been commercialized for the packaging of bone-in fresh meat products, especially fresh red meat products and other bone-in meat products, such as whole bone-in pork loins, etc. The patch reduces the likelihood of film puncture from protruding bones. The patch needs to exhibit good resistance to bone puncture. Optimally, the patch should also exhibit a relatively high free shrink at a relatively low temperature, especially at refrigerated temperatures.

Although linear low density polyethylene, very low density polyethylene, and homogeneous ethylene/alpha-olefin copolymers have been taught for use in patch films used in a patch bag, it remains desirable to provide a film which exhibits improved bone puncture resistance, especially in combination with relatively high free shrink.

### Summary of the Invention

GB-A-2,329,373 and WO 97/24272 disclose a patch bag with a patch comprised of propylene copolymer.

The present invention provides a patch bag comprising a heat-shrinkable patch adhered to a heat-shrinkable bag, the heat-shrinkable patch comprising a first heat-shrinkable film and the heat-shrinkable bag comprising a second heat-shrinkable film, the first heat-shrinkable film comprising propylene homopolymer, the first heat-shrinkable film having a total free shrink at 85°C of at least 5 percent.

The present invention is directed to a patch exhibiting a desirable combination: high free shrink in combination with high puncture-resistance, especially at refrigerated temperatures. It has been discovered that a patch film comprising propylene homopolymer or copolymer can be used to provide a combination of high puncture-resistance, and high total free shrink at 85°C. It has also been discovered that a blend of a more highly crystalline polymer with a lower crystallinity polymer, wherein at least one of the polymers comprises polypropylene, provides further advantages in the combination of puncture-resistance, free shrink, and ease of manufacture.

In one preferred embodiment, the first heat-shrinkable film comprises a propylene homopolymer having a density of less than about 0.90 g/cc (more preferably less than 0.89, more preferably less than 0.88).

In another preferred embodiment, the first heat shrinkable film comprises a propylene homopolymer having a melting point of less than about 140°C (more preferably, less than 102°C, more preferably, less than 100°C).

In another preferred embodiment, the first heat-shrinkable film comprises: (a) a propylene homopolymer having a density of less than about 0.90 g/cc and (b) an ethylene homopolymer. In one preferred embodiment, the first heat-shrinkable film comprises a blend of (a) and (b). Preferably, the first heat-shrinkable film comprises an ethylene/alpha-olefin copolymer having a density of greater than about 0.915 g/cc, and (b) an ethylene homopolymer. In one preferred embodiment, the first heat-shrinkable film comprises a blend of (a) and (b) Preferably, the first heat-shrinkable film comprises an ethylene/alpha-olefin copolymer having a density of greater than about 0.915 g/cc.

In another preferred embodiment, the first heat-shrinkable film comprises a blend of a first polypropylene having a density of less than about 0.89 g/cc, and a second polypropylene having a density of greater than about 0.89 g/cc. In another preferred embodiment the first heat-shrinkable film comprises a blend of a first polypropylene having a density of less than about 0.89 g/cc, and a second polypropylene having a density greater than the density of the first polypropylene. Preferably, the first polypropylene has a Young's modulus (or flexural modulus, 1% secant at 0.05 in/mil) of less than about 2000 MPa; more preferably, less than about 1500 MPa; more preferably, less than about 1000 MPa, more preferably, less than about 800 MPa; more preferably, less than about 700 MPa, more preferably, less than about 650 MPa; more preferably, less than about 600 MPa; more preferably, less than about 550 MPa; and more preferably, less than about 500 MPa. The first polypropylene preferably has a crystallinity less than about 50%, more preferably, less than about 40%; more preferably, less than about 30%; more preferably, less than about 25%; more preferably, less than about 20%; more preferably, less than about 15%; and more preferably, less than about 10%. Preferably, the polypropylene has a melting point of less than about 160°C; more preferably, less than about 150°C; more preferably, less than about 145°C; more preferably, less than about 140°C; and more preferably, less than about 135°C. Examples of preferred polypropylene as used in the patch bag of the invention include ADFLEX^{™} polypropylene resins from Montell Corporation, TAFMER^{™} P series resins from Mitsui Petrochemical Industries, Ltd., and polypropylene copolymers and polypropylene terpolymers produced by Sumitomo Corporation.

Preferably, the first heat-shrinkable film has a normalized impact strength (as measured by break load) of at least 30 Newtons/mil (1200 N/mm) (preferably, 40, 50, 60, 70, 80, or 85 N/mil (1600, 2000, 2400, 2800, 3200, 3350 N/mm)), using ASTM D 3763. Preferably, the first heat-shrinkable film has an instrumented impact strength (break load measured using ASTM D 3763) of at least about 200 Newtons (N), more preferably, at least about 250 N; more preferably, at least about 300 N; more preferably, at least about 325 N; more preferably, at least about 350 N; more preferably, at least about 360 N; more preferably, at least about 370 N; more preferably, at least about 380 N, more preferably, at least about 390 N; and more preferably, at least about 400 N. Preferably, the first heat-shrinkable film has an impact strength (energy to break measured using ASTM D 3763) of at least about 5 Joules (preferably at least about 5.5. 6, 6.25, 6.5, 6.75, 7.0, or 7.5). Preferably, the first heat-shrinkable film has a normalized energy to break of at least about 0.5 Joules/mil (20 J/mm) (preferably, at least about 0.7, 0.9, 1.0, 1.1, 1.2, 1.3, 1.35, 1.4, 1.45, or 1.5 Joules/mil 28, 35, 39, 43, 47, 51, 53, 55, 57, or 59 J/mm)). These values are preferred for both 32°F and 73°F (0°C and 23°C).

In another preferred embodiment, the first heat-shrinkable film comprises a first layer and a second layer, wherein: (A) the first layer comprises propylene homopolymer, and (B) the second layer comprises a self-adhesive polymer.

Preferably, at least one member selected from the group consisting of polypropylene homopolymer and polypropylene copolymer is present in the first film in an amount of at least about 5 percent, based on total weight of the first heat-shrinkable film (more preferably, at least 10, 15, 20, 30, 40, 50, 60, 70, 70, 80, 90 percent).
Preferably, the first heat-shrinkable film has a total free shrink, at 85°C, of at least 35 percent (more preferably, at least 45 percent), and the second heat-shrinkable film has a total free shrink, at 85°C, of at least 35 percent (more preferably, at least 45 percent). More preferably, the first heat-shrinkable film has a total free shrink, at 85°C, of from about 50 percent to about 120 percent; more preferably, from about 50 percent to about 100 percent, and more preferably, from about 50 percent to about 80 percent. Preferably, the second heat-shrinkable film has a total free shrink, at 85°C, of from about 50 percent to about 120 percent; more preferably, from about 50 percent to about 100 percent; and more preferably, from about 50 percent to about 80 percent.

Preferably, the first heat-shrinkable film further comprises up to 15 weight percent of at least one member selected from the group consisting of slip, filler, pigment, dye, radiation stabilizer, antioxidant, fluorescence additive, antistatic agent, elastomer, and viscosity-modifying agent.

In one preferred embodiment, the first heat-shrinkable film is a monolayer film. In another preferred embodiment, the first heat-shrinkable film is a multilayer film. Preferably, the second heat-shrinkable film is biaxially oriented, and comprises an outside abuse layer, an inner O₂-barrier layer, and an inside-sealant layer, preferably, the first heat-shrinkable film is also biaxially-oriented. Although the patch can be adhered to the inside surface of the bag or the outside surface of the bag, preferably the patch is adhered to the outside surface of the bag. Preferably the patch is adhered to the bag with an adhesive

Preferably, the first heat-shrinkable film comprises a crosslinked polymer network.

Although the first heat-shrinkable film can be a monolayer film or a multilayer film, in one preferred embodiment the first heat-shrinkable film has two outer layers and at least one inner layer between the outer layers. At least one of the outer layers comprises at least one member selected from the group consisting of propylene homopolymer and propylene copolymer, with the inner layer comprising at least one member selected from the group consisting of ethylene/unsaturated ester copolymer (including especially ethylene/vinyl acetate copolymer, ethylene/methyl acrylate copolymer, and ethylene/butyl acrylate copolymer), homogeneous ethylene/alpha-olefin copolymer, heterogeneous ethylene/alpha-olefin copolymer, ethylene/unsaturated acid copolymer (including especially ethylene/acrylic acid, ethylene/methacrylic acid), ionomer, and any other polymers capable of self-welding at the desired processing temperature. Preferably, the first heat-shrinkable film has a symmetrical cross-section. Preferably, the inner layer is self-welded. Preferably, the inner layer comprises ethylene/vinyl acetate copolymer in an amount of at least 50 percent, based on the weight of the inner layer; more preferably, at least 60 percent; more preferably, at least 70 percent; more preferably, at least 80 percent; more preferably, at least 90 percent; more preferably, 100 percent. Preferably, the ethylene/vinyl acetate copolymer comprises vinyl acetate mer in an amount of from about 3-50 weight percent, based on the weight of the ethylene/vinyl acetate copolymer; preferably, from about 15 to 40 weight percent; preferably, from about 25 to 35 weight percent.

Preferably, the multilayer film comprises at least two layers which comprise the polypropylene homopolymer and/or polypropylene copolymer. Preferably, the multilayer film has a symmetrical cross-section. Preferably, the two layers comprising the polypropylene homopolymer and/or polypropylene copolymer are the outer layers of the first heat-shrinkable film. Alternatively, the first heat-shrinkable film comprises an intermediate layer which also comprises polypropylene homopolymer and/or polypropylene copolymer.

### Brief Description of the Drawings

Figure 1 illustrates a lay-flat view of an end-seal patch bag
Figure 2 illustrates a cross-sectional view of the patch bag of Figure 1, taken through section 2-2 thereof.
Figure 3 illustrated a cross-sectional view of a multilayer film for use in a preferred patch in accordance with the present invention.
Figure 4 illustrates a schematic view of a preferred process for making the patch film used in the patch bag of the present invention.
Figure 5 illustrates a cross-sectional view of a multilayer film for use in a preferred bag in accordance with the present invention.
Figure 6 illustrates a schematic view of a preferred process for making the multilayer film of Figure 5.

### Detailed Description of the Invention

As used herein, the term "bag" is inclusive of L-seal bags, side-seal bags, backseamed bags, and pouches. An L-seal bag has an open top, a bottom seal, one side-seal along a first side edge, and a seamless (i.e., folded, unsealed) second side edge. A side-seal bag has a an open top, a seamless bottom edge, with each of its two side edges having a seal therealong. Although seals along the side and/or bottom edges can be at the very edge itself, (i.e., seals of a type commonly referred to as "trim seals"), preferably the seals are spaced inward (preferably 1/4 to 1/2 inch (6-12mm)) from the bag side edges, and preferably are made using a impulse-type heat sealing apparatus, which utilizes a bar which is quickly heated and then quickly cooled. A backseamed bag is a bag having an open top, a seal running the length of the bag in which the bag film is either fin-sealed or lap-sealed, two seamless side edges, and a bottom seal along a bottom edge of the bag.

As used herein, the phrases "heat-shrinkable," "heat-shrink" refer to the tendency of a film, generally an oriented film, to shrink upon the application of heat, i.e., to contract upon being heated, such that the size (area) of the film decreases if the film is not restrained when heated. Likewise, the tension of a heat-shrinkable film increases upon the application of heat if the film is restrained from shrinking. As a corollary, the phrase "heat-contracted" refers to a heat-shrinkable film, or a portion thereof, which has been exposed to heat such that the film or portion thereof is in a heat-shrunken state, i.e., reduced in size (unrestrained) or under increased tension (restrained). Preferably, the heat-shrinkable film has a total free shrink (i.e., machine direction plus transverse direction), as measured by ASTM D 2732, of at least as 5 percent at 185°C, more preferably at least 7 percent, still more preferably, at least 10 percent, and, yet still more preferably, at least 20 percent.

As used herein, the phrase "heterogeneous polymer" refers to polymerization reaction products of relatively wide variation in molecular weight and relatively wide variation in composition distribution, i.e., typical polymers prepared, for example, using conventional Ziegler-Natta catalysts. Heterogeneous copolymers typically contain a relatively wide variety of chain lengths and comonomer percentages.

As used herein, the phrase "homogeneous polymer" refers to polymerization reaction products of relatively narrow molecular weight distribution and relatively narrow composition distribution. Homogeneous polymers are useful in various layers of the multilayer film used in the present invention. Homogeneous polymers are structurally different from heterogeneous polymers, in that homogeneous polymers exhibit a relatively even sequencing of comonomers within a chain, a mirroring of sequence distribution in all chains, and a similarity of length of all chains, i.e., a narrower molecular weight distribution. Furthermore, homogeneous polymers are typically prepared using metallocene, or other single-site type catalysis, rather than using Ziegler Natta catalysts.

More particularly, homogeneous ethylene/alpha-olefin copolymers may be characterized by one or more processes known to those of skill in the art, such as molecular weight distribution (Mw/Mn), Mz/Mn, composition distribution breadth index (CDBI), and narrow melting point range and single melt point behavior. The molecular weight distribution (Mw/Mn), also known as polydispersity, may be determined by gel permeation chromatography The homogeneous ethylene/alpha-olefin copolymers useful in this invention generally has (Mw/Mn) of less than 2.7; preferably from about 1.9 to 2.5; more preferably, from about 1.9 to 2.3. The composition distribution breadth index (CDBI) of such homogeneous ethylene/alpha-olefin copolymers will generally be greater than about 70 percent. The CDBI is defined as the weight percent of the copolymer molecules having a comonomer content within 50 percent (i.e., plus or minus 50%) of the median total molar comonomer content. The CDBI of linear polyethylene, which does not contain a comonomer, is defined to be 100%. The Composition Distribution Breadth Index (CDBI) is determined via the technique of Temperature Rising Elution Fractionation (TREF). CDBI determination clearly distinguishes the homogeneous copolymers (narrow composition distribution as assessed by CDBI values generally above 70%) from VLDPEs available commercially which generally have a broad composition distribution as assessed by CDBI values generally less than 55%. The CDBI of a copolymer is readily calculated from data obtained from techniques known in the art, such as, for example, temperature rising elution fractionation as described, for example, in Wild et. al., J. Poly. Sci. Poly Phys Ed., Vol. 20, p.441 (1982). Preferably, homogeneous ethylene/alpha-olefin copolymers have a CDBI greater than about 70%, i.e., a CDBI of from about 70% to 99%. In general, the homogeneous ethylene/alpha-olefin copolymers in the patch bag of the present invention also exhibit a relatively narrow melting point range, in comparison with "heterogeneous copolymers", i.e., polymers having a CDBI of less than 55%. Preferably, the homogeneous ethylene/alpha-olefin copolymers exhibit an essentially singular melting point characteristic, with a peak melting point (Tm), as determined by Differential Scanning Calorimetry (DSC), of from about 60°C to 110°C. Preferably the homogeneous copolymer has a DSC peak Tm of from about 80°C to 100°C. As used herein, the phrase "essentially single melting point" means that at least about 80%, by weight, of the material corresponds to a single Tm peak at a temperature within the range of from about 60°C to 110°C, and essentially no substantial fraction of the material has a peak melting point in excess of about 115°C., as determined by DSC analysis. DSC measurements are made on a Perkin Elmer System 7 Thermal Analysis System. Melting information reported are second melting data, i.e., the sample is heated at a programmed rate of 10°C/min. to a temperature below its critical range. The sample is then reheated (2nd melting) at a programmed rate of 10°C/min. The presence of higher melting peaks is detrimental to film properties such as haze, and compromises the chances for meaningful reduction in the seal initiation temperature of the final film.

A homogeneous ethylene/alpha-olefin copolymer can, in general, be prepared by the copolymerization of ethylene and any one or more alpha-olefin. Preferably, the alpha-olefin is a C₃-C₂₀ alpha-monoolefin, more preferably, a C₄-C₁₂ alpha-monoolefin, still more preferably, a C₄-C₈ alpha-monoolefin. Still more preferably, the alpha-olefin comprises at least one member selected from the group consisting of butene-1, hexene-1, and octene-1, i.e., 1-butene, 1-hexene, and 1-octene, respectively. Most preferably, the alpha-olefin comprises octene-1, and/or a blend of hexene-1 and butene-1.

Processes for preparing and using homogeneous polymers are disclosed in U.S. Patent No. 5,206,075, U.S. Patent No. 5,241,031, and PCT International Application WO 93/03093.
Further details regarding the production and use of homogeneous ethylene/alpha-olefin copolymers are disclosed in PCT International Publication Number WO 90/03414, and PCT International Publication Number WO 93/03093, both of which designate Exxon Chemical Patents, Inc. as the Applicant.

Still another genus of homogeneous ethylene/alpha-olefin copolymers is disclosed in U.S. Patent No. 5,272,236, to LAI, et. al., and U.S. Patent No. 5,278,272, to LAI, et. al.. Each of these patents disclose substantially linear homogeneous long chain , branched ethylene/alpha-olefin copolymers produced and marketed by The Dow Chemical Company.

As used herein, the phrase "ethylene/alpha-olefin copolymer", and "ethylene/alpha-olefin copolymer", refer to such materials as linear low density polyethylene (LLDPE), and very low and ultra low density polyethylene (VLDPE and ULDPE); and homogeneous polymers such as metallocene catalyzed polymers such as EXACT^{®} resins obtainable from the Exxon Chemical Company, and TAFMER^{®} resins obtainable from the Mitsui Petrochemical Corporation. All these materials generally include copolymers of ethylene with one or more comonomers selected from C₄ to C₁₀ alpha-olefin such as butene-1 (i.e., 1-butene), hexene-1, octene-1, etc. in which the molecules of the copolymers comprise long chains with relatively few side chain branches or cross-linked structures. This molecular structure is to be contrasted with conventional low or medium density polyethylenes which are more highly branched than their respective counterparts. The heterogeneous ethylene/alpha-olefins commonly known as LLDPE have a density usually in the range of from about 0.91 grams per cubic centimeter to about 0.94 grams per cubic centimeter. Other ethylene/alpha-olefin copolymers, such as the long chain branched homogeneous ethylene/alpha-olefin copolymers available from the Dow Chemical Company, known as AFFINITY^{®} resins, are also included as another type of homogeneous ethylene/alpha-olefin copolymer useful in the present invention.

In general, the ethylene/alpha-olefin copolymer comprises a copolymer resulting from the copolymerization of from about 80 to 99 weight percent ethylene and from 1 to 20 weight percent alpha-olefin. Preferably, the ethylene/alpha-olefin copolymer comprises a copolymer resulting from the copolymerization of from about 85 to 95 weight percent ethylene and from 5 to 15 weight percent alpha-olefin.

As used herein, the phrase "very low density polyethylene" refers to heterogeneous ethylene/alpha-olefin copolymers having a density of 0.915 g/cc and below, preferably from about 0.88 to 0.915 g/cc. As used herein, the phrase "linear low density polyethylene" refers to, and is inclusive of, both heterogeneous and homogeneous ethylene/alpha-olefin copolymers having a density of at least 0.915 g/cc, preferably from 0.916 to 0.95 g/cc.

As used herein, the phrases "inner layer" and "internal layer" refer to any layer, of a multilayer film, having both of its principal surfaces directly adhered to another layer of the film.

As used herein, the phrase "outer layer" refers to any film layer of film having less than two of its principal surfaces directly adhered to another layer of the film. The phrase is inclusive of monolayer and multilayer films. In multilayer films, there are two outer layers, each of which has a principal surface adhered to only one other layer of the multilayer film. In monolayer films, there is only one layer, which, of course, is an outer layer in that neither of its two principal surfaces are adhered to another layer of the film

As used herein, the phrase "inside layer" refers to the outer layer of a multilayer film packaging a product, which is closest to the product, relative to the other layers of the multilayer film.

As used herein, the phrase "outside layer" refers to the outer layer, of a multilayer film packaging a product, which is furthest from the product relative to the other layers of the multilayer film. Likewise, the "outside surface" of a bag is the surface away from the product being packaged within the bag.

As used herein, the term "adhered" is inclusive of films which are directly adhered to one another using a heat seal or other means, as well as films which are adhered to one another using an adhesive which is between the two films.

Although the films used in the patch bag according to the present invention can be monolayer films or multilayer films, the patch bag comprises at least two films laminated together. Preferably, the patch bag is comprised of films which together comprise a total of from 2 to 20 layers; more preferably, from 2 to 12 layers; and still more preferably, from 4 to 12 layers. In general, the multilayer film(s) used in the present invention can have any total thickness desired, so long as the film provides the desired properties for the particular packaging operation in which the film is used, e.g. abuse-resistance (especially puncture-resistance), modulus, seal strength, optics, etc.

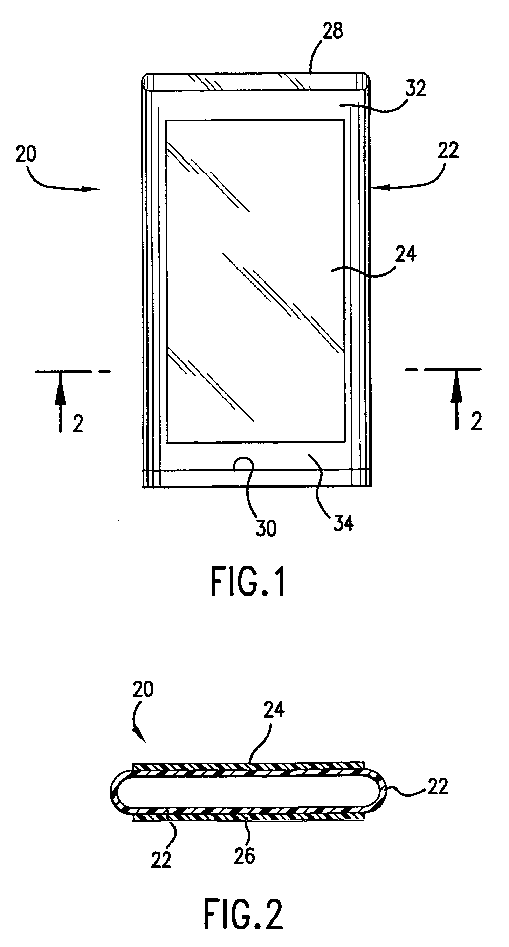

Figure 1 is a lay-flat view of a preferred end-seal patch bag 20, in a lay-flat position, this patch bag being in accordance with the present invention; Figure 2 is a transverse cross-sectional view of patch bag 20, taken through section 2-2 of Figure 1. Viewing Figures 1 and 2 together, patch bag 20 comprises bag 22, first patch 24, second patch 26, open top 28, and end-seal 30.

Those portions of bag 22 to which patches 24 and 26 are adhered are "covered", i.e., protected, by patches 24 and 26, respectively. Upper and lower end portions 32 and 34 (respectively) of bag 22 are preferably not covered by patch 24, for ease in producing end-seal 26, which is preferably made before a product is placed in the bag, as well as a top-seal (not illustrated) which is preferably made after a product is placed in the bag. Unless performed properly, heat-sealing through bag and patch 22 and patch 24 together can result in burn-through and/or a weaker seal. For a special process of sealing through the patch and bag together, see USSN 60/042664, in the name of DePoorter et al, entitled "PATCH BAG HAVING SEAL THROUGH PATCHES," filed April 4, 1997.

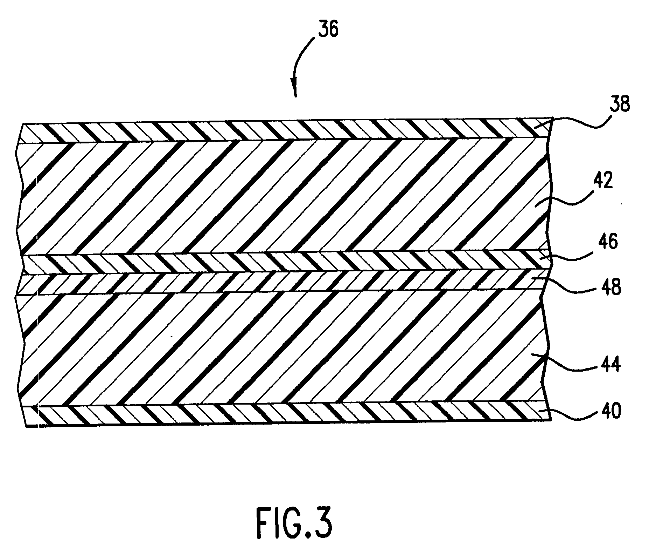

Figure 3 illustrates a schematic view of a preferred film for use as the patch film in, for example, the patch bag illustrated in Figures 1 and 2. In Figure 3, multilayer film 36 has outer layers 38 and 40, intermediate layers 42 and 44, and self-weld layers 46 and 48.

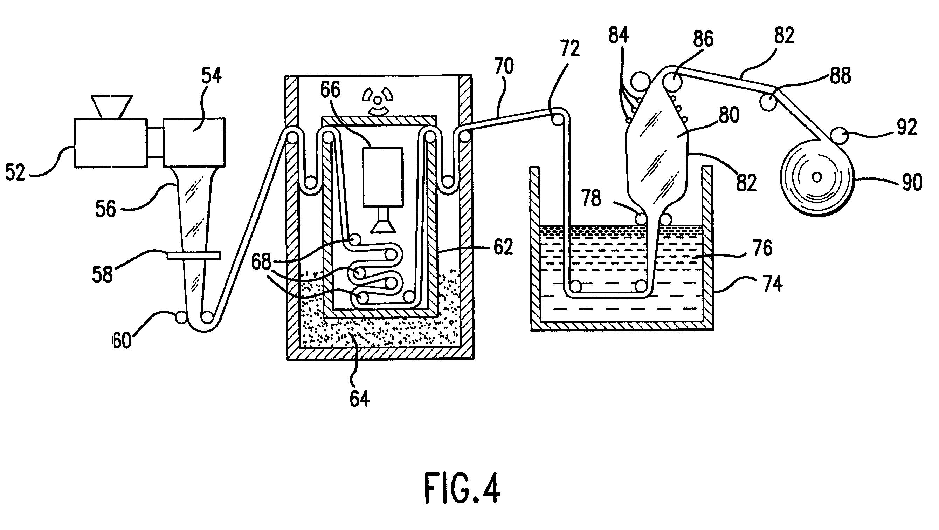

Figure 4 illustrates a schematic of a preferred process for producing the multilayer film for use in the patch in the patch bag of the present invention, e.g. the patch film illustrated in Figure 3. In the process illustrated in Figure 4, solid polymer beads (not illustrated) are fed to a plurality of extruders 52 (for simplicity, only one extruder is illustrated). Inside extruders 52, the polymer beads are forwarded, melted, and degassed, following which the resulting bubble-free melt is forwarded into die head 54, and extruded through annular die, resulting in tubing 56 which is 5-40 mils thick, more preferably 20-30 mils thick, still more preferably, about 25 mils thick.

After cooling or quenching by water spray from cooling ring 58, tubing 56 is collapsed by pinch rolls 60, and is thereafter fed through irradiation vault 62 surrounded by shielding 64, where tubing 56 is irradiated with high energy electrons (i.e., ionizing radiation) from iron core transformer accelerator 66. Tubing 56 is guided through irradiation vault 62 on rolls 68. Preferably, the irradiation of tubing 56 is at a level of from about 10 megarads ("MR").

After irradiation, irradiated tubing 70 is directed over guide roll 72, after which irradiated tubing 70 passes into hot water bath tank 74 containing hot water 76. The now collapsed irradiated tubing 70 is submersed in the hot water for a retention time of at least about 5 seconds, i.e., for a time period in order to bring the film up to the desired temperature, following which supplemental heating means (not illustrated) including a plurality of steam rolls around which irradiated tubing 70 is partially wound, and optional hot air blowers, elevate the temperature of irradiated tubing 70 to a desired orientation temperature of from about 240°F-250°F (115-120°C). A preferred means for heating irradiated tubing 70 is with an infrared oven (not illustrated), by exposure to infrared radiation for about 3 seconds, also bringing the tubing up to about 240-250°F (115-120°C). Thereafter, irradiated film 70 is directed through nip rolls 78, and bubble 80 is blown, thereby transversely stretching irradiated tubing 70. Furthermore, while being blown, i.e., transversely stretched, irradiated film 70 is drawn (i.e., in the longitudinal direction) between nip rolls 78 and nip rolls 86, as nip rolls 86 have a higher surface speed than the surface speed of nip rolls 78. As a result of the transverse stretching and longitudinal drawing, irradiated, biaxially-oriented, blown tubing film 82 is produced, this blown tubing preferably having been both stretched at a ratio of from about 1:1.5 - 1:6, and drawn at a ratio of from about 1:1.5-1:6. More preferably, the stretching and drawing are each performed at a ratio of from about 1:2 - 1:4. The result is a biaxial orientation of from about 1:2.25 - 1:36, more preferably, 1:4 - 1:16. While bubble 80 is maintained between pinch rolls 78 and 86, blown tubing 82 is collapsed by rolls 84, and thereafter conveyed through nip rolls 86 and across guide roll 88, and then rolled onto wind-up roller 90. Idler roll 92 assures a good wind-up.

Preferably, the stock film from which the bag is formed has a total thickness of from about 1.5 to 5 mils (0.04 to 0.13 mm); more preferably, about 2.5 mils (0.06 mm). Preferably the stock film from which the bag is formed is a multilayer film having from 3 to 7 layers; more preferably, 4 layers.

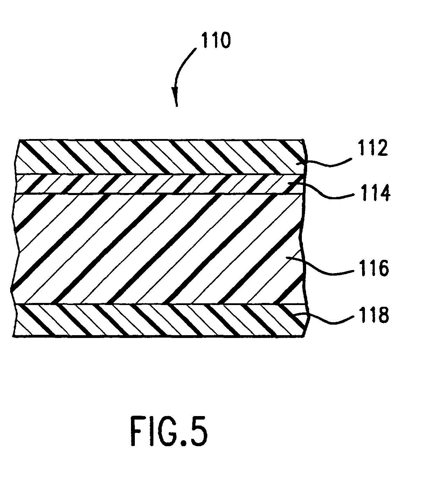

Figure 5 illustrates a cross-sectional view of preferred multilayer film 110 for use as the tubing film stock from which bag 22 is formed. Multilayer film 110 has a physical structure, in terms of number of layers, layer thickness, and layer arrangement and orientation in the patch bag, and a chemical composition in terms of the various polymers, etc. present in each of the layers, as set forth in Table I, below

**TABLE I**

| **Layer Designation** | **Layer Function** | **Layer Chemical Identity** | **Layer Thickness** | |
|---|---|---|---|---|
| | | | **mils** | **(mm)** |
| 112 | Outside and abuse layer | 90% EVA #1 | 0.58 | (0.015) |
| | | 10% HDPE #1 | | |
| 114 | O₂-Barrier layer | 96% VDC/MA #1; | 0.19 | (0.005) |
| | | 2% epoxidized soybean oil; and | | |
| | | 2% bu-A/MA/bu-MA terpolymer | | |
| 116 | Puncture-resistant | 85% LLDPE #1 & 15% EBA #1 | 0.15 | (0.03) |
| 118 | Sealant and inside layer | 80% SSPE#1 | 0.48 | (0.012) |
| | | 20% LLDPE #2 | | |

LLDPE #1 was-DOWLEX^{®} 2045 linear low density polyethylene, obtained from the Dow Chemical Company of Midland, Michigan. LLDPE #2 was Escorene^{®} LL3003.32 linear low density polyethylene, obtained from Exxon Chemical Company of Baytown, Texas. SSPE#1 was Affinity^{®} metallocene-catalyzed ethylene/octene copolymer, obtained from The Dow Chemical Company, of Midland, Michigan. HDPE #1 was Fortiflex^{®} T60-500-119 high density polyethylene, obtained from Solvay, Polymers, Deer Park, Texas. EVA No. 1 was Escorene^{®} LD31892 ethylene/vinyl acetate copolymer having a melt index of 2.0, a density of 0.930 g/cc, and a vinyl acetate mer content of 9 percent, this resin being obtained from the Exxon Chemical Company. EBA No. 1 was SP1802 ethylene/butyl acrylate copolymer containing 18% butyl acrylate, obtained from Chevron Chemical Company, of Houston, Texas. VDC/MA No. 1 was SARAN^{®} MA-134 vinylidene chloride/methyl acrylate copolymer, obtained from the Dow Chemical Company. The epoxidized soybean oil was PLAS-CHEK^{®} 775 epoxidized soybean oil, obtained from the Bedford Chemical Division of Ferro Corporation, of Walton Hills, Ohio. Bu-A/MA/bu-MA terpolymer was METABLEN^{®} L-1000 butyl acrylate/methyl methacrylate/butyl methacrylate terpolymer, obtained from Elf Atochem North America, Inc., of 2000 Market Street, Philadelphia, Pennsylvania 19103.

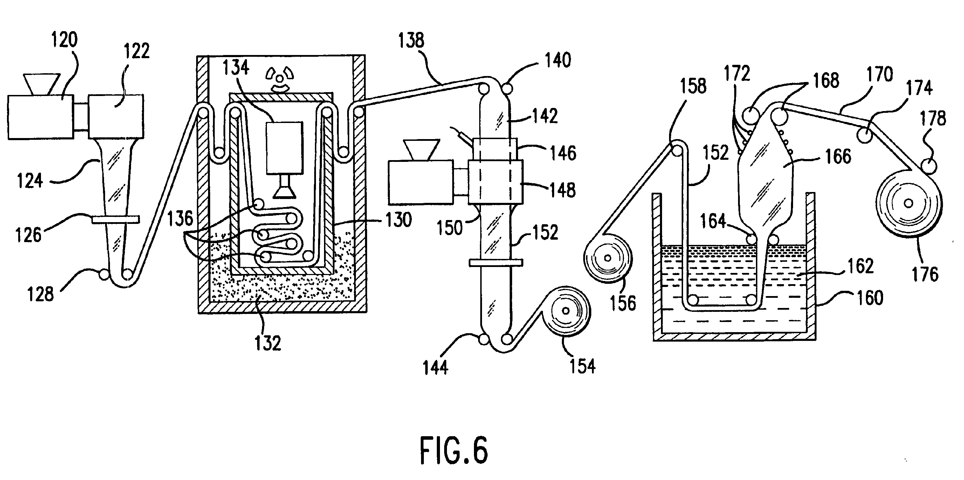

Figure 6 illustrates a schematic of a preferred process for producing the multilayer film of Figure 5. In the process illustrated in Figure 6, solid polymer beads (not illustrated) are fed to a plurality of extruders 120 (for simplicity, only one extruder is illustrated). Inside extruders 120, the polymer beads are forwarded, melted, and degassed, following which the resulting bubble-free melt is forwarded into die head 122, and extruded through an annular die, resulting in tubing 124 which is 10 to 30 mils (0.3 to 0.8 mm) thick, more preferably 15 to 25 mils (0.4 to 0.6 mm) thick.

After cooling or quenching by water spray from cooling ring 126, tubing 124 is collapsed by pinch rolls 128, and is thereafter fed through irradiation vault 130 surrounded by shielding 132, where tubing 124 is irradiated with high energy electrons (i.e., ionizing radiation) from iron core transformer accelerator 134. Tubing 124 is guided through irradiation vault 130 on rolls 136. Preferably, tubing 124 is irradiated to a level of about 4.5 MR

After irradiation, irradiated tubing 138 is directed through nip rolls 140, following which tubing 138 is slightly inflated, resulting in trapped bubble 142. However, at trapped bubble 142, the tubing is not significantly drawn longitudinally, as the surface speed of nip rolls 144 are about the same speed as nip rolls 140. Furthermore, irradiated tubing 138 is inflated only enough to provide a substantially circular tubing without significant transverse orientation, i.e., without stretching.

Slightly inflated, irradiated tubing 138 is passed through vacuum chamber 146, and thereafter forwarded through coating die 148. Second tubular film 150 is melt extruded from coating die 148 and coated onto slightly inflated, irradiated tube 138, to form two-ply tubular film 152. Second tubular film 150 preferably comprises an O₂-barrier layer, which does not pass through the ionizing radiation. Further details of the above-described coating step are generally as set forth in U.S. Patent No. 4,278,738, to BRAX et. Al..

After irradiation and coating, two-ply tubing film 152 is wound up onto windup roll 154. Thereafter, windup roll 154 is removed and installed as unwind roll 156, on a second stage in the process of making the tubing film as ultimately desired. Two-ply tubular film 152, from unwind roll 156, is unwound and passed over guide roll 158, after which two-ply tubular film 152 passes into hot water bath tank 160 containing hot water 162. The now collapsed, irradiated, coated tubular film 152 is submersed in hot water 162 (having a temperature of about 210°F (99°C)) for a retention time of at least about 5 seconds, i.e., for a time period in order to bring the film up to the desired temperature for biaxial orientation. Thereafter, irradiated tubular film 152 is directed through nip rolls 164, and bubble 166 is blown, thereby transversely stretching tubular film 152. Furthermore, while being blown, i.e., transversely stretched, nip rolls 168 draw tubular film 152 in the longitudinal direction, as nip rolls 168 have a surface speed higher than the surface speed of nip rolls 164. As a result of the transverse stretching and longitudinal drawing, irradiated, coated biaxially-oriented blown tubing film 170 is produced, this blown tubing preferably having been both stretched in a ratio of from about 1:1.5 - 1:6, and drawn in a ratio of from about 1:1.5-1:6. More preferably, the stretching and drawing are each performed a ratio of from about 1:2 - 1:4. The result is a biaxial orientation of from about 1:2.25 - 1:36, more preferably, 1:4 - 1:16. While bubble 166 is maintained between pinch rolls 164 and 168, blown tubing film 170 is collapsed by rolls 172, and thereafter conveyed through nip rolls 168 and across guide roll 174, and then rolled onto wind-up roll 176. Idler roll 178 assures a good wind-up.

The polymer components used to fabricate multilayer films according to the present invention may also contain appropriate amounts of other additives normally included in such compositions. These include antiblocking agents (such as talc), slip agents (such as fatty acid amides), fillers, pigments and dyes, radiation stabilizers (including antioxidants), fluorescence additives (including a material which fluoresces under ultraviolet radiation), antistatic agents, elastomers, viscosity-modifying substances (such as fluoropolymer processing aids) and additives known to those of skill in the art of packaging films.

The multilayer films used to make the patch bag of the present invention are preferably irradiated to induce crosslinking, as well as corona treated to roughen the surface of the films which are to be adhered to one another. In the irradiation process, the film is subjected to an energetic radiation treatment, such as corona discharge, plasma, flame, ultraviolet, X-ray, gamma ray, beta ray, and high energy electron treatment, which induce cross-linking between molecules of the irradiated material. The irradiation of polymeric films is disclosed in U.S. Patent NO. 4,064,296, to BORNSTEIN, et. Al.. BORNSTEIN, et. Al. Discloses the use of ionizing radiation for crosslinking the polymer present in the film.

Radiation dosages are referred to herein in terms of the radiation unit "RAD", with one million RADS, also known as a megarad, being designated as "MR", or, in terms of the radiation unit kiloGray (kGy), with 10 kiloGray representing 1 MR, as is known to those of skill in the art. A suitable radiation dosage of high energy electrons is in the range of up to about 16 to 166 kGy, more preferably about 40 to 90 kGy, and still more preferably, 55 to 75 kGy. Preferably, irradiation is carried out by an electron accelerator and the dosage level is determined by standard dosimetry processes. Other accelerators such as a van de Graaf or resonating transformer may be used. The radiation is not limited to electrons from an accelerator since any ionizing radiation may be used.

As used herein, the phrases "corona treatment" and "corona discharge treatment" refer to subjecting the surfaces of thermoplastic materials, such as polyolefins, to corona discharge, i.e., the ionization of a gas such as air in close proximity to a film surface, the ionization initiated by a high voltage passed through a nearby electrode, and causing oxidation and other changes to the film surface, such as surface roughness.

Corona treatment of polymeric materials is disclosed in U.S. Patent No. 4,120,716, to BONET, issued October 17, 1978, discloses improved adherence characteristics of the surface of polyethylene by corona treatment, to oxidize the polyethylene surface. U.S. Patent No. 4,879,430, to HOFFMAN, discloses the use of corona discharge for the treatment of plastic webs for use in meat cook-in packaging, with the corona treatment of the inside surface of the web to increase the adhesion of the meat to the adhesion of the meat to the proteinaceous material. Although corona treatment is a preferred treatment of the multilayer films used to make the patch bag of the present invention, plasma treatment of the film may also be used.

Laminating the patch to the bag can be accomplished by a variety of methods, including the use of an adhesive, corona treatment, or even heat sealing. Adhesives are the preferred means for accomplishing the lamination. Examples of suitable types of adhesives include thermoplastic acrylic emulsions, solvent based adhesives and high solids adhesives, ultraviolet-cured adhesive, and electron-beam cured adhesive, as known to those of skill in the art. A preferred adhesive is a thermoplastic acrylic emulsion known as RHOPLEX^{®} N619 (thermoplastic acrylic emulsion, obtained from the Rohm & Haas Company, at Dominion Plaza Suite 545, 17304 Preston Rd., Dallas, Texas 75252, Rohm & Haas having headquarters at 7th floor, Independence Mall West, Philadelphia, Penn. 19105.

In a preferred embodiment, the first film comprises (a) a first component comprising propylene homopolymer and/or propylene copolymer, and (b) a second component comprising an ethylene homopolymer or ethylene copolymer, or a propylene homopolymer or copolymer having a density greater than the density of the polymer of the first component. Preferably, the polypropylene homopolymer or copolymer of the first component comprises has a density of less than about 0.905 g/cc, or less than about 0.902 g/cc, or less than about 0.90 g/cc, or less than about 0.895 g/cc, or less than about 0.890 g/cc, or less than about 0.885 g/cc. Preferably the polypropylene homopolymer or copolymer of the first component has a melting point of less than about 160°C, or less than about 150°C, or less than about 140°C, or less than about 130°C, or less than about 120°C, or less than about 110°C, or less than about 100°C.

Preferably, the first film comprises the first component in an amount less than about 90%, based on the weight of the first film, or less than about 80%, or less than about 70%, or less than about 60%, or even less than about 50%. In some embodiments, the first component is present in the first film in an amount of less than about 40%, or 30%, or 20% or 10%, based on the weight of the first film. Preferred ranges for the first component include from 2 to 90% based on the weight of the first film, from 2 to 70%, from 5 to 50%, from 5 to 40%, from 5 to 30%, from 5 to 25%, from 7 to 25%, and from 10 to 20%, based on the weight of the first component.

Preferably, the second component contains an ethylene/alpha-olefin in which the alpha-olefin comonomer comprises at least one comonomer selected from the group consisting of C₃-C₂₀ olefin; more preferably, C₃-C₂₀ alpha-monoolefin, more preferably, C₄-C₁₂ alpha-monoolefin, still more preferably, C₄-C₈ alpha-monoolefin. Preferably, the alpha-olefin comprises at least one member selected from the group consisting of butene-1, hexene-1, and octene-1, i.e., 1-butene, 1-hexene, and 1-octene, respectively.
Preferably, the alpha-olefin comprises octene-1, and/or a blend of hexene-1 and butene-1. The second component can comprise an ethylene/alpha-olefin copolymer consisting of two or more comonomers.

Preferably, the second component comprises an ethylene copolymer, which preferably is at least one member selected from the group consisting of ethylene/alpha-olefin copolymer, ethylene/acrylic acid copolymer, and ethylene/unsaturated ester copolymer. Preferably, the ethylene copolymer comprises an ethylene/alpha-olefin copolymer, which may be heterogeneous or homogeneous, but which is preferably heterogeneous. Preferably, the ethylene/alpha-olefin copolymer has a density of from about 0.88 to 0.96 g/cc, or 0.89 to 0.94, or 0.90 to 0.925, or 0.91 to 0.930, or 0.915 to 0.930 Preferably, the ethylene/alpha-olefin copolymer has a density of at least about 0.90 g/cc, or at least about 0.905 g/cc, or at least about 0.910 g/cc, or at least about 0.912 g/cc, or at least about 0.914 g/cc, or at least about 0.915 g/cc, or at least about 0.917 g/cc. If the second component is a propylene homopolymer or a propylene copolymer, preferably it has a density of at least about 0.89 g/cc, or at least about 0.895 g/cc, or at least about 0.90 g/cc, or at least about 0.902 g/cc. If the second component is a propylene homopolymer or a propylene copolymer, preferably the propylene polymer or copolymer has a melting point of at least 120°C, at least 130°C, at least 140°C, or at least 150°C.

Preferably, the first film comprises the second component in an amount of at least about 35%, based on the total weight of the first film; more preferably, at least 40%; more preferably, at least about 45%; more preferably, about 50 percent. In some embodiments, the first film comprises the second component in an amount of at least 55 percent, even at least 60 percent, even at least 65 percent, and even as high as 70 percent, based on total film weight. Preferred ranges for the amount of the second component in the first film are from 10 to 90%, based on the total weight of the first film, or from 30 to 90%, or from 50 to 90%, or from 60 to 85%, or from 75 to 85%.

The first component can be present in an inner film layer or in an outer film layer. The first and second components can be present in separate layers or as a blend in the same layer.

In an especially preferred embodiment, the first film comprises a first layer which comprises a blend of the first component and the second component, each having a chemical composition as described supra. Preferably, the first layer comprises the second component in an amount of at least about 10%, based on the total weight of the first layer; more preferably, at least 20%; more preferably, at least about 30%; more preferably, at least about 40%; more preferably, at least about 50%; more preferably, at least about 60%; more preferably, at least about 70%; more preferably, at least about 75%; more preferably, at least about 80%; and more preferably, at least about 85%. In some embodiments, the first film can comprise the second component in an amount which is at least about 90% based on the total weight of the first layer; more preferably, at least about 95% In this same embodiment, the first layer preferably comprises the first component in an amount of at least about 2%, based on the weight of the first layer; more preferably, at least about 5%; more preferably, at least about 7%; more preferably, at least about 10%; more preferably, at least about 15%; more preferably, at least about 20%; and more preferably, at least about 25%. The first film comprises a first layer which preferably comprises the first component in an amount preferably less than about 90%, based on the weight of the first layer; more preferably, less than about 80%; more preferably, less than about 70%; more preferably, less than about 60%; more preferably, less than about 50%; more preferably, less than about 40%; more preferably, less than about 35%, and more preferably, less than about 30%.

While the first layer can be an outer layer or an inner layer; preferably, it is not the innermost layer. The first layer as described above preferably has a thickness of from about 0.001 to about 0.2 mm; more preferably, from about 0.003 mm to about 0.2 mm; more preferably, from about 0.005 mm to about 0.15 mm, more preferably, from about 0.007 to about 0.15 mm; more preferably, from about 0.01 mm to about 0.15 mm; more preferably, from about 0.015 mm to about 0.15 mm; more preferably, from about 0.02 mm to about 0.15 mm; more preferably, from about 0.03 mm to about 0.15 mm; more preferably, from about 0.04 mm to about 0.12 mm; and most preferably from about 0.04 mm to about 0.10 mm. Generally, the thickness of the first layer is from about 1 to about 100%, based on the total thickness of the multilayer film; more preferably, from about 5 to about 100%; more preferably, from about 10 to about 40%; more preferably, from about 20 to about 100%; and more preferably, from about 25% to about 100%. In one preferred embodiment, the first layer has a thickness of at least about 10%; more preferably, at least about 20%; more preferably, at least about 30%; more preferably, at least about 40%; more preferably, at least about 50%; more preferably, at least about 60%, more preferably, at least about 70%; and more preferably, at least about 80%, based on the total thickness of the multilayer film.

Preferably, the first layer contains one or more polymers having a melt index (or melt flow) of from about 0.3 to about 50; more preferably from about 0.5 to about 20; still more preferably from about 0.7 to about 10; even more preferably from about 1 to about 8; and, still more preferably from about 1 to about 6 (as measured by ASTM D1238; the teaching of which is hereby incorporated, in its entirety, by reference thereto). More preferably, the first component comprises a polymer having a melt index of less than about 5, more preferably, less than about 3; more preferably, less than about 2.5; more preferably, less than about 2.0, more preferably, less than about 1.5, more preferably, less than about 1.3; and more preferably, less than about 1.2. In some embodiments, it is preferable that the first component comprises a polymer having a melt index of less than about 1, more preferably, less than about 0.9.

Preferably, the second component comprises a polymer having a melt index of less than about 20; more preferably, less than about 10; more preferably, less than about 5, more preferably, less than about 3; more preferably, less than about 2; and more preferably, less than about 1.5. It is also preferred that the second component comprise a polymer having a melt index of at least about 0.5; more preferably, at least about 0.8.

While the first film could be a monolayer film, preferably, the first film comprises a second layer, in addition to the first layer described above. This second layer preferably comprises at least one member selected from the group consisting of polyolefin, polystyrene, polyamide, polyester, and polyurethane; more preferably, a polyolefin. The second layer preferably comprises at least one member selected from the group consisting of polyethylene homopolymer, polyethylene copolymer, polypropylene homopolymer, polypropylene copolymer, polybutene homopolymer, polybutene copolymer. The polyolefin can be a homogeneous polyolefin or a heterogeneous polyolefin. Preferably, the polyolefin includes at least one member selected from the group consisting of ethylene/alpha-olefin copolymer, ethylene/unsaturated ester copolymer, and ethylene/unsaturated acid copolymer. The preferred ethylene/alpha-olefin copolymers are as described supra in the description of the first layer. While the second layer could be an inner layer or an outer layer, preferably, the second layer is an inner layer.

The second layer, as described above, preferably has a thickness of from about 0.001 to about 0.2 mm; more preferably, from about 0.003 to about 0.2 mm; more preferably from about 0.005 to about 0.15 mm; more preferably, from about 0.007 to about 0.15 mm; more preferably, from about 0.01 mm to about 0.15 mm; more preferably, from about 0.015 mm to about 0.15 mm; more preferably, from about 0.02 mm to about 0.15 mm; more preferably, from about 0.03 mm to about 0.15 mm, more preferably, from about 0.04 mm to about 0.12 mm; and most preferably from about 0.04 mm to about 0.10 mm. Generally, the thickness of the second layer is from about 1 to about 95% based on the total thickness of the multilayer film; more preferably from about 5 to about 95%; more preferably from about 10 to about 95%; more preferably from about 20 to about 95%, and more preferably from about 25 to about 95%. In one preferred embodiment, the second layer has a thickness of at least about 10% based on the total thickness of the multilayer film, more preferably, at least about 20%; more preferably, at least about 30%; more preferably, at least about 40%; more preferably, at least about 50%; more preferably, at least about 60%; more preferably, at least about 70%, and more preferably, at least about 80%, based on the total thickness of the multilayer film.

Preferably, the second layer contains at least one polymer having a melt index of from about 0.3 to about 50, as measured by ASTM D1238; the teaching of which is hereby incorporated, in its entirety, by reference thereto; more preferably from about 0.5 to about 20; more preferably from about 0.7 to about 10; even more preferably from about 1 to about 8; and, more preferably from about 1 to about 6.

Optionally, the first film can comprise a third layer, the third layer having a thickness and composition as described above in the description of the second layer. Optionally, the first film can further comprise a fourth layer and/or a fifth layer, these having a thickness and composition as described above in the description of the second layer.

Preferably, the first film has a transverse direction free shrink at 85°C of at least about 5%; more preferably, at least about 8%; more preferably, at least about 10%; more preferably, at least about 15%, more preferably, at least about 18%, more preferably, at least about 20%; more preferably, at least about 22%; more preferably, at least about 24%, more preferably, at least about 26%; more preferably, at least about 28%; more preferably, at least about 30%; and more preferably, at least about 32%.

Preferably, the first film has a longitudinal direction free shrink at 85°C of at least 5%; more preferably, at least 8%; more preferably, at least 10%; more preferably, at least 12%; more preferably, at least 14%; more preferably, at least about 16%; more preferably, at least about 18%; more preferably, at least about 20%; and more preferably, at least about 22%.

Preferably, the first film has a total free shrink at 85°C (i.e., L+T at 85°C) of at least 5%; more preferably, at least 10%; more preferably, at least 20%; more preferably, at least 30%; more preferably, at least 40%; more preferably, at least about 50%; more preferably, at least about 52%; more preferably, at least about 54%; and more preferably, at least about 56%; more preferably, at least about 58%; and more preferably, at least about 60%.

The first film of the present invention preferably has a total thickness of from about 0.01 to about 0.25 mm, more preferably from about 0.03 to about 0.20 mm, more preferably from about 0.04 to about 0.18 mm, even more preferably from about 0.06 to about 0.16 mm; more preferably, from about 0.07 to about 0.14 mm; more preferably from about 0.07 to about 0.13 mm; more preferably, from about 0.07 to about 0.12 mm; more preferably, from about 0.07 to about 0.11 mm; and more preferably, from about 0.07 to about 0.10 mm. Preferably, the first film has a thickness of less than about 0.2 mm, more preferably, less than about 0.18 mm; more preferably, less than about 0.16 mm; more preferably, less than about 0.14 mm; more preferably, less than about 0.13 mm; and more preferably, less than about 0.12 mm; and more preferably, less than about 0.11 mm. Preferably, the first film also has a thickness of at least about 0.01 mm, more preferably, at least about 0.03 mm; more preferably, at least about 0.04 mm; more preferably, at least about 0.06 mm; and more preferably, at least about 0.07 mm.

Preferably, the first film according to the present invention comprises a total of from 1 to 20 layers; more preferably, from 1 to 10 layers; more preferably, from 1 to 8 layers; more preferably, from 1 to 6 layers. Preferably, the multilayer film of the invention consists of 1, 2, 3, 4, 5, 6, 7, 8, 9, 10, 11, or 12 layers. While adjacent layers can have identical or similar compositions, preferably, adjacent layers have different compositions.

The first heat-shrinkable film of the present invention can be irradiated and/or corona treated. The term "irradiation" refers to subjecting a film material to radiation such as corona discharge, plasma, flame, ultraviolet, X-ray, gamma ray, beta ray, and high energy electron treatment, any of which can alter the surface of the film and/or induce crosslinking between molecules of the polymers contained therein. The use of ionizing radiation for crosslinking polymers present in a film structure is disclosed in U.S. Patent No 4,064,296 (Bornstein et al.). Irradiation can produce a cross-linked polymer network and enhances the orientation process used in making the first heat-shrinkable film. In addition, the process of irradiation can improve the impact strength of the first heat-shrinkable film. It has also been discovered that for certain preferred films of this invention, the process of irradiation can improve the total free shrink of the first film, especially at higher dosages. This discovery can be utilized to produce a first heat-shrinkable film which has a total free shrink closer to that of the second heat-shrinkable film, thereby providing good compatibility between the total free shrink of the first film and the second film. This compatibility of total free shrink can provide a superior patch bag exhibiting lower punctures and other leakers Irradiation can also improve the inter-ply adhesion between the various layers of the first film, if the first film is a multilayer film.

While the irradiation of polyethylene can increase the impact strength of a polyethylene-containing film, it is not necessarily the same with polypropylene, because these polymers typically experience chain scission upon exposure to irradiation. As a result, it is even more surprising that a preferred polypropylene can be substituted for polyethylene in the irradiated films of the invention, to result in films having superior impact strength properties.

Radiation dosages are referred to herein in terms of the radiation unit "RAD", with one million RADS, also known as a megarad, being designated as "MR", or, in terms of the radiation unit kiloGray (kGy), with 10 kiloGrays representing 1 MR, as known to those of skill in the art. To produce crosslinking, the polymer is subjected to a suitable radiation dosage of high energy electrons, preferably using an electron accelerator, with a dosage level being determined by standard dosimetry methods. A suitable Radiation dosage of high energy electrons is in the range of up to about 13-200 kGy, more preferably about 30-175 kGy, more preferably, 50-150 kGy. Preferably, the radiation dosage is at least about 20 kGy; more preferably, at least 40 kGy; more preferably, at least 50 kGy; more preferably, at least 60 kGy; more preferably, at least 70 kGy; more preferably, at least 80 kGy; more preferably, at least 90 kGy; more preferably, at least 100 kGy; more preferably, at least 110 kGy; more preferably, at least 120 kGy; and more preferably, at least 125 kGy. Preferably, the radiation dosage is less than 300 kGy; and more preferably, less than 200 kGy. Preferably, irradiation is carried out by an electron accelerator and the dosage level is determined by standard dosimetry methods. However, other accelerators such as a Van de Graaf or resonating transformer may be used. The radiation is not limited to electrons from an accelerator since any ionizing radiation may be used. A preferred amount of radiation is dependent upon the film and its end use.

Various combinations of layers can be used in the formation of the first heat-shrinkable film according to the invention. Given below are some examples of preferred combinations in which letters are used to represent film layers. Although only 1 through 3-layer embodiments are provided here for illustrative purposes, the multilayer films of the invention also can include more layers, as follows:
"A" represents a polymer comprising at least one member selected from the group consisting of propylene homopolymer and propylene copolymer;
"B" represents a polymer comprising at least one member selected from the group consisting of ethylene/unsaturated ester copolymer, ethylene/alpha-olefin copolymer, ethylene/unsaturated acid copolymer, and ionomer;
"C" represents a polymer comprising at least one member selected from the group consisting of polyolefin, polystyrene, polyamide, polyester, and polyurethane, as described in the description of the second layer.
"X" represents a layer comprising "A";
"Y" represents a layer comprising "B"
"Z" represents a layer comprising at least one member selected from the group consisting of polyolefin, polystyrene, polyamide, polyester, and polyurethane, as described in the description of the second layer.

The film may be a monolayer film comprising (1) A only, (B) a blend of A & B, or (3) a blend of A & B & C. Some preferred two layer films are represented in Table II, below.

**Table II**

| Film # | 1^{st} layer | 2^{nd} layer |
|---|---|---|
| 1 | A | B |
| 2 | A | B+A |
| 3 | A | B+C |
| 4 | A | B+C+A |
| 5 | B | A+B |
| 6 | B | A+C |
| 7 | B | A+B+C |
| 8 | A+B | C |
| 9 | A+B | A+B |
| 10 | A+B | A+C |
| 11 | A+B | B+C |
| 12 | A+C | B+C |
| 13 | B+C | A+B |
| 14 | B+C | A+C |

Some preferred three layer films include: X / Y / X; X / Y / Z; Y / X / Y; Y / X / Z; X / Z /Y; A + B / Z / C; A+C / Z / B; and, B+C / Z / A. In any one of these multilayer structures, a plurality of layers may be formed of the same or different modified compositions and one or more tie-layers added.

### EXAMPLES

The following abbreviations are used in Examples 1-7, below;
- "EVA #1": was LD 761.36 ethylene/vinyl acetate copolymer containing vinyl acetate mer in an amount of about 28 percent. This copolymer had a density of about 0.95 g/cm³, and was obtained from the Exxon Chemical Company, of Baytown, Texas.
- "EVA #2": was LD318.92 ethylene/vinyl acetate copolymer containing vinyl acetate mer in an amount of about 9 percent. This copolymer had a density of about 0.93 g/cm³, and was obtained from the Exxon Chemical Company, of Baytown, Texas.
- "LLDPE #1": was DOWLEX^{®} 2045 linear low density polyethylene, having a density of 0.920 g/cm³ and a melt index of 1.1, obtained from The Dow Chemical Company, of Midland, Michigan.
- "LLDPE #2": was DOWLEX^{®} 2244 linear low density polyethylene, having a density of 0.916 g/cm³ and a melt index of 3.3, obtained from The Dow Chemical Company, of Midland, Michigan.
- "Antiblock # 1": was L-7106-AB antiblock masterbatch, based on LDPE, obtained from Bayshore Industrial, Inc. This resin had a density of 0.945 g/cm³ and a melt index of about 4.5.
- "PP # 1": was KS-052P polypropylene resin, having a density of about 0.89 g/cm³ and a melt index of about 0.9, and was obtained from Montell USA Inc.

### Example 1 - Patch Film No. 1

A coextruded, three-ply tube was cast, the tube having a thickness of about 0.437 mm, the tube having an inside A layer making up about 18 percent of the tape thickness, an inner B layer making up about 70 percent of the tape thickness, and an outside C layer making up about 12 percent of the tape thickness.

The three-ply tube was cooled to a solid phase in a water bath and then electronically crosslinked with a 500 Kev beam to a level of about 97 kGy. The resulting crosslinked three-ply tube was then heated by hot water to a temperature of about 98°C and subsequently oriented by being drawn and stretched between 250 and 300%, in each of the machine and transverse directions, respectively, using a trapped bubble of air held between two nip rolls. The orientation produced a three-ply film in the form of a tube, called tubing, having a thickness of about 0.061 mm.

After orientation, the resulting tube of hot-water-shrinkable flat tubular film was passed through a pair of nip rolls, causing the inside A layer to bond to itself upon tube collapse, rendering a final six-ply film, with the "middle" plies being the inside A layer bonded to itself, i.e., resulting in a "6-ply" patch film having a thickness of about 4.8 mils.

Table III, immediately below, includes the chemical composition and thickness of each of the layers of Patch Film No. 1 (in the final patch film):

**TABLE III**

| Layer Identity | Chemical Identity |
|---|---|
| C | 97% PP#1 |
| | 3% Antiblock #1 |
| B | LLDPE #1 |
| A | EVA #1 |
| A | EVA #1 |
| B | LLDPE #1 |
| C | 97% PP #1 |
| | 3% Antiblock #1 |

Patch Film No. 1 was composed of the above six layers. The two middle A layers were adhered to themselves, i.e., the inside layer of the tubular film was self-welded. Film No. 1 was determined to have a free shrink at 85°C (via ASTM D 2732), and impact strength, as set forth below in Table X.

### Example 2 - Patch Film No. 2

A coextruded, three-ply tube was cast, the tube having a thickness of about 0.437 mm, the tube having an inside A layer making up about 18 percent of the tape thickness, an internal B layer making up about 70 percent of the tape thickness, and an outside C layer making up about 12 percent of the tape thickness

The three-ply tube was cooled to a solid phase in a water bath and then electronically crosslinked with a 500 Kev beam to a level of about 97 kGy. The resulting crosslinked three-ply tube was then heated by hot water to a temperature of about 98°C and subsequently oriented by being drawn and stretched between 250 and 300%, in each of the machine ("L" or "M") and transverse ("T") directions, respectively, using a trapped bubble of air held between two nip rolls. The orientation produced a three-ply film in the form of a tube, called tubing, having a thickness of about 0.059 mm.

After orientation, the resulting tube of hot-water-shrinkable flat tubular film was passed through a pair of nip rolls, causing the inside A layer to bond to itself upon tube collapse, rendering a final six-ply film, with the "middle" plies being the inside A layer bonded to itself, i.e., resulting in a "6-ply" patch film having a thickness of about 4.7 mils.

Table IV, immediately below, includes the chemical composition and thickness of each of the layers of Patch No. 2.

**Table IV**

| Layer Identity | Chemical Identity |
|---|---|
| C | 87% LLDPE# 1 |
| | 10% EVA#2 |
| | 3% Antiblock #1 |
| B | 90% LLDPE # 1 |
| | 10% PP#1 |
| A | EVA#1 |
| A | EVA#1 |
| B | 90% LLDPE # 1 |
| | 10% PP# 1 |
| C | 87% LLDPE#1 |
| | 10% EVA#2 |
| | 3% Antiblock #1 |

Patch Film No. 2 was composed of the above six layers. The two middle A layers were adhered to themselves. Patch Film No. 2 was determined to have a free shrink at 85°C (via ASTM D 2732), and impact strength, as set forth below in Table X.

### Example #3 - Patch Film No. 3 (Comparative)

A coextruded, two-ply tube was cast, the tube having a thickness of about 0.437 mm, the tube having an inside A layer making up about 18 percent of the tape thickness, and an outside B layer making up about 82 percent of the tape thickness. The two-ply tube was cooled to a solid phase in a water bath and then electronically crosslinked with a 500 Kev beam to a level of about 97 kGy. The resulting crosslinked two-ply tube was then heated by hot water to a temperature of about 98°C and subsequently oriented by being drawn and stretched between 250 and 300%, in each of the machine and transverse directions, respectively, using a trapped bubble of air held between two nip rolls. The orientation produced a two-ply film in the form of a tube, called tubing, having a thickness of about 0.058 mm.

After orientation, the resulting tube of hot-water-shrinkable flat tubular film was passed through a pair of nip rolls, causing the inside A layer to bond to itself upon tube collapse, rendering a final four-ply film, with the "middle" plies being the inside A layer bonded to itself, i.e., resulting in a "4-ply" patch film having a thickness of about 4.6 mils.

Table V includes the chemical composition and thickness of each of the layers of Patch No. 3 (in the final patch film):

**Table V**

| Layer Identity | Chemical Identity |
|---|---|
| B | LLDPE #1 (67%) |
| | EVA#2 (30%) |
| | Antiblock#1 (3%) |
| A | EVA #1 |
| A | EVA #1 |
| B | LLDPE #1 (67%) |
| | EVA#2 (30%) |
| | Antiblock#1 (3%) |

Patch Film No. 3 was composed of the above four layers. The two middle A layers were adhered to themselves. Patch Film No. 3 was determined to have a free shrink at 85°C (via ASTM D 2732), and impact strength, as set forth below in Table X.

### Example #4 - Patch Film No. 4 (Comparative)

A coextruded, two-ply tube was cast, the tube having a thickness of about 0.437 mm, the tube having an inside A layer making up about 18 percent of the tape thickness, and an outside B layer making up about 82 percent of the tape thickness.

The two-ply tube was cooled to a solid phase in a water bath and then electronically crosslinked with a 500 Kev beam to a level of about 97 kGy. The resulting crosslinked two-ply tube was then heated by hot water to a temperature of about 98°C and subsequently oriented by being drawn and stretched between 250 and 300%, in each of the machine and transverse directions, respectively, using a trapped bubble of air held between two nip rolls. The orientation produced a two-ply film in the form of a tube, called tubing, having a thickness of about 0.065 mm

After orientation, the resulting tube of hot-water-shrinkable flat tubular film was passed through a pair of nip rolls, causing the inside A layer to bond to itself upon tube collapse, rendering a final four-ply film, with the "middle" plies being the inside A layer bonded to itself, i.e., resulting in a "4-ply" patch film having a thickness of about 5.1 mils. Table VI includes the chemical composition and thickness of each of the layers of Patch No. 4 (in the final patch film):

**Table VI**

| Layer Identity | Chemical Identity |
|---|---|
| B | LLDPE #2 (87%) |
| | EVA#2 (10%) |
| | Antiblock#1 (3%) |
| A | EVA #1 |
| A | EVA #1 |
| B | LLDPE #2 (87%) |
| | EVA#2 (10%) |
| | Antiblock#1 (3%) |

Thus, Patch Film No. 4 was composed of the above four layers. The two middle A layers were adhered to themselves. Patch Film No. 4 was determined to have a free shrink at 85°C (via ASTM D 2732), and impact strength, as set forth below in Table X.

### Example #5 - Patch Film No. 5 (Comparative)

A coextruded, two-ply tube was cast, the tube having a thickness of about 0.437 mm, the tube having an inside A layer making up about 18 percent of the tape thickness, and an outside B layer making up about 82 percent of the tape thickness.

The two-ply tube was cooled to a solid phase in a water bath and then electronically crosslinked with a 500 Kev beam to a level of about 97 kGy. The resulting crosslinked two-ply tube was then heated by hot water to a temperature of about 98°C and subsequently oriented by being drawn and stretched between 250 and 300%, in each of the machine and transverse directions, respectively, using a trapped bubble of air held between two nip rolls. The orientation produced a two-ply film in the form of a tube, called tubing, having a thickness of about 0.057 mm.

After orientation, the resulting tube of hot-water-shrinkable flat tubular film was passed through a pair of nip rolls, causing the inside A layer to bond to itself upon tube collapse, rendering a final four-ply film, with the "middle" plies being the inside A layer bonded to itself, i.e., resulting in a "4-ply" patch film having a thickness of about 4.5 mils. Table VII, immediately below, includes the chemical composition and thickness of each of the layers of Patch No. 5 (in the final patch film):

**Table VII**

| Layer Identity | Chemical Identity |
|---|---|
| B | LLDPE #1 (87%) |
| | EVA#2 (10%) |
| | Antiblock#1 (3%) |
| A | EVA#1 |
| A | EVA#1 |
| B | LLDPE #1 (87%) |
| | EVA#2 (10%) |
| | Antiblock#1 (3%) |

Patch Film No. 5 was composed of the above four layers. The two middle A layers were adhered to themselves Patch Film No. 5 was determined to have a free shrink at 85°C (via ASTM D 2732), and impact strength, as set forth below in Table X.

### Example #6 - Patch Film No. 6 (Comparative)

A coextruded, three-ply tube was cast, the tube having a thickness of about 0.437 mm, the tube having an inside A layer making up about 18 percent of the tape thickness, an internal B layer making up about 58 percent of the tape thickness, and an outside C layer making up about 24 percent of the tape thickness.

The three-ply tube was cooled to a solid phase in a water bath and then electronically crosslinked with a 500 Kev beam to a level of about 97 kGy. The resulting crosslinked three-ply tube was then heated by hot water to a temperature of about 98°C and subsequently oriented by being drawn and stretched between 250 and 300%, in each of the machine and transverse directions, respectively, using a trapped bubble of air held between two nip rolls. The orientation produced a three-ply film in the form of a tube, called tubing, having a thickness of about 0.063 mm.

After orientation, the resulting tube of hot-water-shrinkableflat tubular film was passed through a pair of nip rolls, causing the inside A layer to bond to itself upon tube collapse, rendering a final six-ply film, with the "middle" plies being the inside A layer bonded to itself (i.e., resulting in a "6-ply" patch film having a thickness of about 5.0 mils).

Table VIII, immediately below, includes the chemical composition and thickness of each of the layers of Patch No. 6 (in the final patch film):

**Table VIII**

| Layer Identity | Chemical Identity |
|---|---|
| C | LLDPE # 1 (67%) |
| | EVA#2 (30%) |
| | Antiblock#1 (3%) |
| B | LLDPE #1 (87%) |
| | EVA#2 (10%) |
| | Antiblock#1 (3%) |
| A | EVA#1 |
| A | EVA#1 |
| B | LLDPE #1 (87%) |
| | EVA#2 (10%) |
| | Antiblock#1 (3%) |
| C | LLDPE #1 (67%) |
| | EVA#2 (30%) |
| | Antiblock#1 (3%) |

Patch Film No. 6 was composed of the above six layers. The two middle A layers were adhered to themselves. Patch Film No. 6 was determined to have a free shrink at 85°C (via ASTM D 2732), and impact strength, as set forth below in Table X.

### Example # 7 - Patch Film No. 7 (Comparative)

A coextruded, three-ply tube was cast, the tube having a thickness of about 0.437 mm, the tube having an inside A layer making up about 18 percent of the tape thickness, an internal B layer making up about 70 percent of the tape thickness, and an outside C layer making up about 12 percent of the tape thickness. The three-ply tube was cooled to a solid phase in a water bath and then electronically crosslinked with a 500 Kev beam to a level of about 97 kGy. The resulting crosslinked three-ply tube was then heated by hot water to a temperature of about 98°C and subsequently oriented by being drawn and stretched between 250 and 300%, in each of the machine and transverse directions, respectively, using a trapped bubble of air held between two nip rolls. The orientation produced a three-ply film in the form of a tube, called tubing, having a thickness of about 0.065 mm. After orientation, the resulting tube of hot-water-shrinkable flat tubular film was passed through a pair of nip rolls, causing the inside A layer to bond to itself upon tube collapse, rendering a final six-ply film, with the "middle" plies being the inside A layer bonded to itself (i.e., resulting in a "6-ply" patch film having a thickness of about 5.1 mils). Table IX includes the chemical composition and thickness of each of the layers of Patch No. 7 (in the final patch film):

**Table IX**

| Layer Identity | Chemical Identity |
|---|---|
| C | LLDPE #2 (97%) |
| | Antiblock#1 (3%) |
| B | LLDPE #2 (100%) |
| A | EVA #1 |
| A | EVA #1 |
| B | LLDPE #2 (100%) |
| C | LLDPE #2 (97%) |
| | Antiblock#1 (3%) |

Thus, Patch Film No 7 was composed of the above six layers. The two middle A layers were adhered to themselves, i.e., self-welded. Film No. 7 was determined to have a free shrink at 85°C (via ASTM D 2732), and impact strength, as set forth below in Table X.

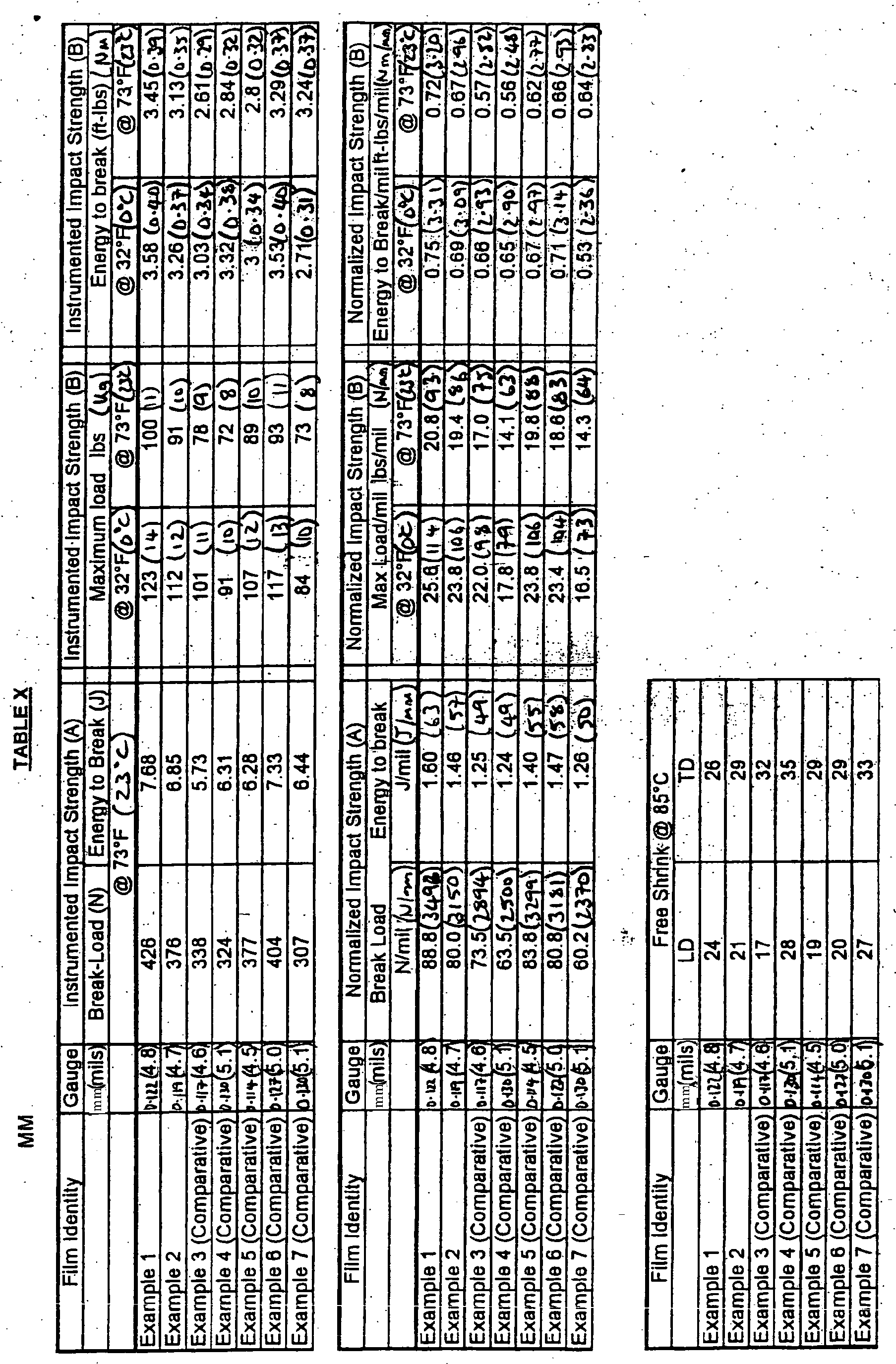

Instrumented Impact 'A' is impact strength (break-load and energy-to-break) at 23°C, measured using an ITR-2000 Instrumented Impact Tester, obtained from Radmana Pty. Ltd., Victoria, Australia. This conforms to ASTM D 3763, hereby incorporated in its entirety by reference thereto. Instrumented Impact 'B' is impact strength (maximum load and energy-to-break) measured using a DYNATUP^{™} Model 8250 instrumented impact strength tester. The DYNATUP^{™} Model 8250 instrumented impact strength tester was manufactured by General Research Corporation, Santa Barbara, California.

The data indicates that the films of this invention (e.g., the films of Examples 1 and 2) have an impact strength which is comparable or in several instances even superior to the impact strength of various films of the prior art Furthermore, the films of Examples 1 and 2 appear to have an improved impact strength over most of the comparative examples at 0°C (which simulates refrigerated conditions typically encountered in meat-packing facilities). At least some of the films of the invention show improved impact over the comparative examples at less than 10°C, preferably from -10° to 10°C, more preferably from about 0 to 10°C. Based on these findings, it is now believed that patch films having good heat-shrinkability and impact strength can be produced by making the patch film from a propylene homopolymer or copolymer, especially when the first heat-shrinkable film comprises (A) a first component comprising a low crystallinity polypropylene and (B) a second component comprising a high crystallinity polyethylene and/or a high crystallinity polypropylene. It is the combination of the first component and the second component which is believed to generate the especially desirable results obtained with the patch bag of the present invention. Preferably, the first component comprises a relatively low crystallinity polymer, such as the KS-polypropylene resins, exemplified in the films of Examples 1 and 2. The KS-052 resin incorporated in the films of Examples 1 and 2 enhances the impact strength of the first heat-shrinkable film. The good impact strength at 0°C is also believed to be a result of the incorporation of a lower density (i.e., lower crystallinity) polypropylene in the first heat-shrinkable film.

It has been discovered that the presence of (A) a high crystallinity propylene homopolymer or copolymer, and/or relatively high crystallinity polyethylene homopolymer or copolymer, in combination with (B) a relatively low crystallinity propylene homopolymer or copolymer, is advantageous for use in a heat-shrinkable patch film adhered to a heat-shrinkable bag film. While the high crystallinity polymer provides enhanced stiffness (i.e., enhanced modulus) and enhanced abrasion-resistance, it is difficult to stretch films dominated by highly crystalline polymers. The low crystallinity polypropylene component provides enhanced elongation (i.e., is easier to stretch, especially at relatively low solid-state orientation temperatures), as well as providing greater puncture-resistance than high crystallinity polymer.

Importantly, the combination of a high crystallinity polymer and a low crystallinity polypropylene can, in conjunction with crosslinking, be used to optimize the tie-chain concentration, providing an enhanced combination of properties, such as the impact-resistance at refrigerated conditions.

Although in general the bag according to the present invention can be used in the packaging of any product, the bag of the present invention is especially advantageous for the packaging of food products, especially fresh meat products comprising bone, especially cut bone ends present at or near the surface of the fresh meat product. Preferably, the meat product comprises at least one member selected from the group consisting of poultry, pork, beef, lamb, goat, horse, and fish. More preferably, the meat product comprises at least one member selected from the group consisting of ham, sparerib, picnic, back rib, short loin, short rib, whole turkey, and pork loin. Still more preferably, the meat product comprises bone-in ham, including both smoked and processed ham, fresh bone-in ham, turkey, chicken, and beef shank. Ribs are a particularly preferred cut for packaging in the patch bag of the present invention.

Although the present invention has been described in connection with the preferred embodiments, it is to be understood that modifications and variations may be utilized without departing from the scope of the invention as defined in the claims.

## Claims

1. A patch bag comprising a heat-shrinkable patch adhered to a heat-shrinkable bag, the heat-shrinkable patch comprising a first heat-shrinkable film and the heat-shrinkable bag comprising a second heat-shrinkable film, the first heat-shrinkable film comprising propylene homopolymer, the first heat-shrinkable film having a total free shrink at 85°C of at least 5 percent.

2. The patch bag according to Claim 1, wherein the first heat shrinkable film comprises a propylene homopolymer having a density of less than about 0.90 g/cc.

3. The patch bag according to Claim 1, wherein the first heat-shrinkable film comprises a propylene homopolymer having a melting point of less than about 140°C.

4. The patch bag according to Claim 1, wherein the first heat-shrinkable film comprises a blend of (a) an ethylene homopolymer or ethylene copolymer, and (b) a propylene homopolymer having a density of less than about 0.89 g/cc.

5. The patch bag according to Claim 4, wherein the first heat-shrinkable film comprises an ethylene/alpha-olefin copolymer having a density of greater than about 0.915 g/cc.

6. The patch bag according to Claim 1, wherein the first heat-shrinkable film comprises a blend of (a) an ethylene/alpha-olefin copolymer and (b) a propylene homopolymer having a density of less than about 0.89 g/cc.

7. The patch bag according to Claim 6, wherein the ethylene/alpha-olefin copolymer has a density of greater than about 0.915 g/cc.

8. The patch bag according to Claim 1, wherein the first heat-shrinkable film comprises a blend of a first polypropylene having a density of less than about 0.89 g/cc, and a second polypropylene having a density of greater than about 0.89 g/cc.

9. The patch bag according to Claim 1, wherein the first heat-shrinkable film comprises a blend of a first polypropylene having a density of less than about 0.89 g/cc, and a second polypropylene having a density greater than the density of the first polypropylene.

10. The patch bag according to Claim 1, wherein the polypropylene has a Young's modulus of less than about 1000 MPa.

11. The patch bag according to Claim 1, wherein the first heat-shrinkable film has an impact strength, as measured by break load, of at least about 200 Newtons.

12. The patch bag according to Claim 1, wherein the first heat-shrinkable film has an instrumented impact strength, as measured by energy to break, of at least about 6 Joules.

13. The patch bag according to Claim 1, wherein the first heat-shrinkable film comprises a first layer and a second layer, wherein:
(A) the first layer comprises propylene homopolymer; and
(B) the second layer comprises a self-adhesive polymer.

14. The patch bag according to Claim 1, wherein the at least one member is present in the first film in an amount of at least about 10% based on the total weight of the first film.

15. The patch bag according to Claim 1, wherein the first heat-shrinkable film has a total free shrink, at 85°C, of at least 35 percent, and wherein the second heat-shrinkable film has a total free shrink, at 85°C, of at least 35 percent.

16. The patch bag according to Claim 1, wherein the first heat-shrinkable film further comprises up to 15 weight percent of at least one member selected from the group consisting of slip, filler, pigment, dye, radiation stabilizer, antioxidant, fluorescence additive, antistatic agent, elastomer, and viscosity-modifying agent.

17. The patch bag according to Claim 1, wherein the first heat-shrinkable film is a monolayer film.

18. The patch bag according to Claim 1, wherein the second heat-shrinkable film is biaxially-oriented, and comprises an outside abuse layer, an inner 02-barrier layer, and an inside-sealant layer, and the first heat-shrinkable film is biaxially oriented.

19. The patch bag according to Claim 1, wherein the patch is adhered to an outside surface of the bag.

20. The patch bag according to Claim 1, wherein the first heat-shrinkable film comprises a crosslinked polymer network.

21. The patch bag according to Claim 1, wherein the first heat-shrinkable film is a multilayer film.

22. The patch bag according to Claim 21, in which the first heat-shrinkable film has two outer layers and at least one inner layer between the outer layers, wherein:
at least one of the outer layers comprises propylene homopolymer; and
the inner layer comprises at least one member selected from the group consisting of ethylene/unsaturated ester copolymer, homogeneous ethylene/alpha-olefin copolymer, ethylene/unsaturated acid copolymer, and ionomer.

23. The patch bag according to Claim 22, wherein the first heat-shrinkable film has a symmetrical cross-section.

24. The patch bag according to Claim 22, wherein the inner layer is self-welded.

25. The patch bag according to Claim 1, wherein the second heat-shrinkable film comprises an 02-barrier layer containing vinylidene chloride copolymer.

26. The patch bag according to Claim 1, wherein the first heat-shrinkable film has outer layers comprising at least one member selected from the group consisting of polyethylene homopolymer, polyethylene copolymer, ethylene/unsaturated ester copolymer, and ethylene/unsaturated acid copolymer.

## Patentansprüche

1. Patch-Beutel, der einen auf einen wärmeschrumpfbaren Beutel befestigten wärmeschrumpfbaren Patch umfasst, wobei der wärmeschrumpfbare Patch eine erste wärmeschrumpfbare Folie umfasst und der wärmeschrumpfbare Beutel eine zweite wärmeschrumpfbare Folie umfasst, wobei die erste wärmeschrumpfbare Folie Propylenhomopolymer umfasst und die erste wärmeschrumpfbare Folie eine gesamte freie Schrumpfung bei 85°C von mindestens 5 % hat.

2. Patch-Beutel nach Anspruch 1, bei dem die erste wärmeschrumpfbare Folie ein Propylenhomopolymer mit einer Dichte von weniger als etwa 0,90 g/cm³ umfasst.

3. Patch-Beutel nach Anspruch 1, bei dem die erste wärmeschrumpfbare Folie ein Propylenhomopolymer mit einem Schmelzpunkt von weniger als etwa 140°C umfasst.

4. Patch-Beutel nach Anspruch 1, bei dem die erste wärmeschrumpfbare Folie ein Gemisch aus (a) einem Ethylenhomopolymer oder Ethylencopolymer und (b) einem Propylenhomopolymer mit einer Dichte von weniger als etwa 0,89 g/cm³ umfasst.

5. Patch-Beutel nach Anspruch 4, bei dem die erste wärmeschrumpfbare Folie ein Ethylen/α-Olefin-Copolymer mit einer Dichte von mehr als etwa 0,915 g/cm³ umfasst.

6. Patch-Beutel nach Anspruch 1, bei dem die erste wärmeschrumpfbare Folie ein Gemisch aus (a) einem Ethylen/α-Olefin-Copolymer und (b) einem Propylenhomopolymer mit einer Dichte von weniger als etwa 0,89 g/cm³ umfasst.

7. Patch-Beutel nach Anspruch 6, bei dem das Ethylen/α-Olefin-Copolymer eine Dichte von mehr als etwa 0,915 g/cm³ hat.

8. Patch-Beutel nach Anspruch 1, bei dem die erste wärmeschrumpfbare Folie ein Gemisch aus einem ersten Polypropylen mit einer Dichte von weniger als etwa 0,89 g/cm³ und einem zweiten Polypropylen mit einer Dichte von mehr als etwa 0,89 g/cm³ umfasst.

9. Patch-Beutel nach Anspruch 1, bei dem die erste wärmeschrumpfbare Folie ein Gemisch aus einem ersten Polypropylen mit einer Dichte von weniger als etwa 0,89 g/cm³ und einem zweiten Polypropylen mit einer Dichte umfasst, die größer als die Dichte des ersten Polypropylens ist.

10. Patch-Beutel nach Anspruch 1, bei dem das Polypropylen einen Elastizitätsmodul von weniger als etwa 1000 MPa hat.

11. Patch-Beutel nach Anspruch 1, bei dem die erste wärmeschrumpfbare Folie eine Schlagfestigkeit, gemessen durch Bruchlast, von mindestens etwa 200 Newton hat.

12. Patch-Beutel nach Anspruch 1, bei dem die erste wärmeschrumpfbare Folie eine instrumentell ermittelte Schlagfestigkeit, gemessen durch Bruchenergie, von mindestens etwa 6 Joule hat.

13. Patch-Beutel nach Anspruch 1, bei dem die erste wärmeschrumpfbare Folie eine erste Schicht und eine zweite Schicht umfasst, wobei:
(A) die erste Schicht Propylenhomopolymer umfasst, und
(B) die zweite Schicht ein selbstklebendes Polymer umfasst.

14. Patch-Beutel nach Anspruch 1, bei dem das mindestens eine Mitglied in der ersten Folie in einer Menge von mindestens etwa 10 % vorhanden ist, bezogen auf das Gesamtgewicht der ersten Folie.

15. Patch-Beutel nach Anspruch 1, bei dem die erste wärmeschrumpfbare Folie eine gesamte freie Schrumpfung bei 85°C von mindestens 35 % hat und bei dem die zweite wärmeschrumpfbare Folie eine gesamte freie Schrumpfung bei 85°C von mindestens 35 % hat.

16. Patch-Beutel nach Anspruch 1, bei dem die erste wärmeschrumpfbare Folie ferner bis zu 15 Gew.-% von mindestens einem Mitglied ausgewählt aus der Gruppe bestehend aus Gleitmittel, Füllstoff, Pigment, Farbstoff, Strahlungsstabilisator, Antioxidans, Fluoreszenzadditiv, Antistatikmittel, Elastomer und Viskositätsmodifizierungsmittel umfasst.

17. Patch-Beutel nach Anspruch 1, bei dem die erste wärmeschrumpfbare Folie eine Einschichtfolie ist.

18. Patch-Beutel nach Anspruch 1, bei dem die zweite wärmeschrumpfbare Folie biaxial orientiert ist und eine Außenseitenschutzschicht, eine innere O₂-Barriereschicht und eine Innenseitensiegelschicht umfasst und die erste wärmeschrumpfbare Folie biaxial orientiert ist.

19. Patch-Beutel nach Anspruch 1, bei dem der Patch an einer Außenseitenoberfläche des Beutels befestigt ist.

20. Patch-Beutel nach Anspruch 1, bei dem die erste wärmeschrumpfbare Folie ein vernetztes Polymernetzwerk umfasst.

21. Patch-Beutel nach Anspruch 1, bei dem die erste wärmeschrumpfbare Folie eine Mehrschichtfolie ist.

22. Patch-Beutel nach Anspruch 21, bei dem die erste wärmeschrumpfbare Folie zwei äußere Schichten und mindestens eine innere Schicht zwischen den äußeren Schichten hat, wobei:
mindestens eine der äußeren Schichten Propylenhomopolymer umfasst, und
die innere Schicht mindestens ein Mitglied ausgewählt aus der Gruppe bestehend aus Ethylen/ungesättigter Ester-Copolymer, homogenem Ethylen/α-Olefin-Copolymer, Ethylen/ungesättigte Säure-Copolymer und Ionomer umfasst.

23. Patch-Beutel nach Anspruch 22, bei dem die erste wärmeschrumpfbare Folie einen symmetrischen Querschnitt hat.

24. Patch-Beutel nach Anspruch 22, bei dem die innere Schicht selbstgeschweißt ist.

25. Patch-Beutel nach Anspruch 1, bei dem die zweite wärmeschrumpfbare Folie eine O₂-Barriereschicht umfasst, die Vinylidenchloridcopolymer umfasst.

26. Patch-Beutel nach Anspruch 1, bei dem die erste wärmeschrumpfbare Folie äußere Schichten aufweist, die mindestens ein Mitglied ausgewählt aus der Gruppe bestehend aus Polyethylenhomopolymer, Polyethylencopolymer, Ethylen/ungesättigter Ester-Copolymer und Ethylen/ungesättigte Säure-Copolymer umfassen.

## Revendications

1. Un sachet à pièce de renforcement, comprenant une pièce de renforcement thermo-rétractable adhérant à un sachet thermo-rétractable, la pièce de renforcement thermo-rétractable étant composée d'un premier film thermo-rétractable et le sachet thermo-rétractable étant composé d'un deuxième film thermo-rétractable, le premier film thermo-rétractable comprenant un homopolymère de propylène, le premier film thermo-rétractable ayant une rétraction libre totale à 85°C d'au moins 5 pourcents.

2. Le sachet à pièce de renforcement selon la revendication 1, dans lequel le premier film thermo-rétractable est composé d'un homopolymère de propylène ayant une masse volumique inférieure à environ 0,90 g/cm³.

3. Le sachet à pièce de renforcement selon la revendication 1, dans lequel le premier film thermo-rétractable comprend un homopolymère de propylène ayant un point de fusion inférieur à environ 140°C.

4. Le sachet à pièce de renforcement selon la revendication 1, dans lequel le premier film thermo-rétractable comprend un mélange de (a) un homopolymère d'éthylène ou un copolymère d'éthylène et (b) un homopolymère de propylène ayant une masse volumique inférieure ou égale à environ 0,89 g/cm³.

5. Le sachet à pièce de renforcement selon la revendication 6, dans lequel le premier film thermo-rétractable comprend un copolymère éthylène/alpha-oléfine d'une masse volumique supérieure à environ 0,915 g/cm³.

6. Le sachet à pièce de renforcement selon la revendication 1, dans lequel le premier film thermo-rétractable comprend un mélange de (a) un copolymère éthylène/alpha-oléfine et (b) un homopolymère de propylène ayant une densité inférieure à 0,89 g/cm³.

7. Le sachet à pièce de renforcement selon la revendication 6, dans lequel le copolymère éthylène/alpha-oléfine présente une masse volumique supérieure à environ 0,915 g/cm³.

8. Le sachet à pièce de renforcement selon la revendication 1, dans lequel le premier film thermo-rétractable comprend un mélange d'un premier propylène ayant une masse volumique inférieure à environ 0,89 g/cm³ et d'un deuxième polypropylène ayant une masse volumique supérieure à environ 0,89 g/cm³.

9. Le sachet à pièce de renforcement selon la revendication 1, dans lequel le premier film thermo-rétractable comprend un mélange d'un premier propylène ayant une masse volumique inférieure à environ 0,89 g/cm³ et d'un deuxième polypropylène ayant une masse volumique supérieure à la masse volumique du premier polypropylène.

10. Le sachet à pièce de renforcement selon la revendication 1, dans lequel le polypropylène présente un module de Young inférieur à environ 1000 MPa.

11. Le sachet à pièce de renforcement selon la revendication 1, dans lequel le premier film thermo-rétractable présente une résistance à l'impact, mesurée par la charge de rupture, d'au moins environ 200 Newtons.

12. Le sachet à pièce de renforcement selon la revendication 1, dans lequel le premier film thermo-rétractable présente une résistance à l'impact instrumentée, mesurée par l'énergie à la rupture, d'au moins environ 6 Joules.

13. Le sachet à pièce de renforcement selon la revendication 1, dans lequel le premier film thermo-rétractable comprend une première couche et une deuxième couche, dans lequel :
(A) La première couche est composée d'un homopolymère de propylène ; et
(B) la deuxième couche est composée d'un polymère auto-adhésif.

14. Le sachet à pièce de renforcement selon la revendication 1, dans lequel le au moins un organe est présent dans le premier film, en une quantité d'au moins 10 %, basée sur le poids total du premier film.

15. Le sachet à pièce de renforcement selon la revendication 1, dans lequel le premier film thermo-rétractable présente un retrait libre total, à 85°C, d'au moins 35 %, et dans lequel le deuxième film thermo-rétractable présente un retrait libre total, à 85°c, d'au moins 35 %.

16. Le sachet à pièce de renforcement selon la revendication 1, dans lequel le premier film thermo-rétractable comprend en outre jusqu'à 15 % en poids d'au moins un élément, sélectionné dans le groupe composé de barbotine, charge, pigment, teinture, stabilisateur au rayonnement, anti-oxydant, additif de fluorescence, agent anti-statique, élastomère et agent de modification de la viscosité.

17. Le sachet à pièce de renforcement selon la revendication 1, dans lequel le premier film thermo-rétractable est un film mono-couche.

18. Le sachet à pièce de renforcement selon la revendication 1, dans lequel le deuxième film thermo-rétractable est orienté bi-axialement, et comprend une couche sacrificielle extérieure, une couche intérieure de barrière à l'O₂ et une couche d'étanchéité intérieure et le premier film thermo-rétractable est orienté bi-axialement.

19. Le sachet à pièce de renforcement selon la revendication 1, dans lequel la pièce de renforcement adhère à une surface extérieure du sac.

20. Le sachet à pièce de renforcement selon la revendication 1, dans lequel le premier film thermo-rétractable comprend un réseau polymère réticulé.

21. Le sachet à pièce de renforcement selon la revendication 1, dans lequel le premier film thermo-rétractable est un film multi-couches.

22. Le sachet à pièce de renforcement selon la revendication 1, dans lequel le premier film thermo-rétractable présente deux couches extérieures et au moins une couche intérieure entre les couches extérieures, dans lequel: au moins l'une des couches extérieures comprend un homopolymère de propylène ; et
la couche intérieure comprend au moins un élément sélectionné dans le groupe composé de copolymères éthylène/ester insaturé, copolymère homogène éthylène/alpha-oléfine, copolymère éthylène/acide insaturé, et ionomère.

23. Le sachet à pièce de renforcement selon la revendication 22, dans lequel le premier film thermo-rétractable présente une section transversale symétrique.

24. Le sachet à pièce de renforcement selon la revendication 22, dans lequel la couche intérieure est auto-soudée.

25. Le sachet à pièce de renforcement selon la revendication 1, dans lequel le deuxième film thermo-rétractable comprend une couche forant barrière à l'O₂, contenant un copolymère de chlorure de vinylidène.

26. Le sachet à pièce de renforcement selon la revendication 1, dans lequel le premier film thermo-rétractable présente des couches extérieures comprenant au moins un élément, sélectionné dans le groupe composé d'un homopolymère de polyéthylène, d'un copolymère de polyéthylène, d'un copolymère éthylène/ester insaturé et un copolymère éthylène/acide insaturé.
